# EUROPÄISCHE PATENTANMELDUNG

(11) **EP 3 683 933 A1**
(43) Veröffentlichungstag der Anmeldung: **22.07.2020**
(21) Anmeldenummer: 19152433.9
(22) Anmeldetag: 18.01.2019
(51) Int. Cl.: H02K 1/28, H02K 15/02

(54) **FÜGEN EINES BLECHPAKETS AUF EINE WELLE**

(71) Anmelder: Siemens Aktiengesellschaft, 80333 München (DE)
(72) Erfinder: Büttner, Klaus, 97618 Hollstadt (DE); Kirchner, Klaus, 97645 Ostheim (DE); Warmuth, Matthias, 97618 Windshausen (DE)

(57) **Zusammenfassung**

Die Erfindung betrifft ein Blech (1) eines Rotors (6) einer rotatorischen dynamoelektrischen Maschine mit einer Wellenbohrung (3) mit einem Radius (R1), mit zumindest zwei Fädelnuten (7) und zwei Zwischenraumausnehmungen (10), wobei die Fädelnuten (7) jeweils zumindest eine radial nach innen zu einer Achse (12) weisende Blechzunge (8) aufweisen, derart, dass die radial nach innen weisenden Enden (9) der Blechzunge (8) auf einem Radius (R2) liegen, wobei R2 kleiner R1 ist.

## Beschreibung

Die Erfindung betrifft ein Blech eines Rotors einer rotatorischen dynamoelektrischen Maschine, ein Blechpaket eines Rotors einer rotatorisch dynamoelektrischen Maschine, eine dynamoelektrische Maschine mit einem derartig aufgebauten Rotor und ein Verfahren zur Herstellung eines Rotors.

Dynamoelektrische Maschinen werden als Generatoren oder Motoren eingesetzt. Bei einem Motor wird das von ihm erzeugte Drehmoment vom Rotor bzw. Rotorblechpaket auf die Welle übertragen. Dabei ist eine Festigkeit des Blechpakets auf der Welle zu gewährleisten. Dies gilt vor allem bei vertikal aufgebauten Motoren. Die dazu erforderliche Presspassung weist somit ein vergleichsweise hohes Übermaß der Welle zur Paketbohrung bzw. Wellenbohrung des Blechpakets auf.

Beim Aufpressen des Blechpakets wird die Welle idealerweise auf den Wellenspiegel abgestützt, um eine möglichst große Fläche als Auflage zu erhalten. Um eine axiale Aufpresskraft bzw. Fügekraft beim Aufschieben des Blechpakets auf die Welle zu begrenzen, wird das Blechpaket des Rotors mit ca. 250°C bis 300°C aufgewärmt. Dadurch erreicht man eine thermische Aufweitung der Wellenbohrung und somit eine Reduzierung der erforderlichen axialen Fügekraft. Somit ist es möglich, während des Fügeprozesses unterhalb der zulässigen Druckfestigkeit der Auflagefläche der Welle zu bleiben. Dabei ist aber bei Wellen mit einem ungünstigen Längen- und Durchmesserverhältnis die Gefahr einer Wellenknickung gegeben. Daraus ergeben sich folgende Nachteile:
Die Blechpakete des Rotors müssen beim Fügen aufgeheizt werden, um die Fügekraft zu reduzieren, dies erfordert eine Handhabung heißer Bauteile, was unter Arbeitsschutz Gesichtspunkten zu vermeiden ist.

Des Weiteren können nachgeschaltete Fertigungsprozesse, wie das Überdrehen oder Wuchten des Rotors, nicht direkt unmittelbar im Anschluss erfolgen. Der Rotor muss zunächst wieder auf Raumtemperatur abgekühlt werden. Eine Integration dieses Fertigungsschrittes in eine verkettete automatisierte Fertigung eines Rotors bzw. einer elektrischen Maschine, wird dadurch erheblich erschwert. Insbesondere bei hoher Varianz der Rotoren, d.h. unterschiedliche Wellendurchmesser, Rotordurchmesser und bei unterschiedlichen axialen Längen der Blechpakete sind unterschiedliche Aufheiz- und Abkühlzeiten zu berücksichtigen.

Eine weitere Möglichkeit, um das Drehmoment zu übertragen, besteht darin, die Blechpakete des Rotors mit einer Passfedersicherung auf die Welle zu fügen. Bei geschrägten Rotoren müssen diese jedoch geräumt werden.

Auch bei Klebeverbindungen ist eine Aushärtezeit zu berücksichtigen, außerdem sind Kleber unter Wärmeschwankungen, wie sie beim Betrieb der dynamoelektrischen Maschinen durchaus auftreten bezüglich ihrer Haltbarkeit begrenzt.

Ausgehend davon liegt der Erfindung die Aufgabe zugrunde, eine Verbindung zwischen einem Blechpaket eines Rotors und einer Welle zu schaffen, die auch für eine automatisierte Fertigung geeignet ist, ohne aber die oben genannten Nachteile aufzuweisen.

Die Lösung der gestellten Aufgabe gelingt durch ein Blech eines Rotors einer rotatorischen dynamoelektrischen Maschine mit einer Wellenbohrung mit einem Radius R1, mit zumindest zwei Fädelnuten und zwei Zwischenraumausnehmungen aufweist, wobei die Fädelnuten jeweils zumindest eine radial nach innen zu einer Achse weisende Blechzunge aufweisen, derart, dass die radial nach innen weisenden Enden der Blechzunge auf einem Radius R2 liegen, wobei R2 kleiner R1 ist.

Die Lösung der gestellten Aufgabe gelingt ebenso durch ein Blechpaket eines Rotors einer rotatorischen dynamoelektrischen Maschine mit erfindungsgemäßen Blechen wobei in axialer geschichteter Abfolge die Bleche des Rotors in axialer Richtung zumindest abschnittsweise folgendermaßen geschichtet sind, die Bleche mit Blechzungen sind zwischen Blechen angeordnet, die in diesem Bereich Zwischenraumausnehmungen aufweisen.

Die Lösung der gestellten Aufgabe gelingt ebenso durch eine elektrische Maschine mit einem Rotor, der ein erfindungsgemäßes Blechpaket aufweist.

Die Lösung der gestellten Aufgabe gelingt ebenso durch eine Verwendung einer erfindungsgemäßen dynamoelektrischen rotatorischen Maschine bei Kompressoren, Pumpen und Werkzeugmaschinen.

Die Lösung der gestellten Aufgabe gelingt ebenso durch ein Verfahren zum Fügen eines erfindungsgemäßen Blechpakets auf einer Welle durch folgende Schritte
- Bereitstellen eines Blechpakets nach Anspruch 5,
- Bereitstellen einer Welle in einer Vorrichtung,
- axiales Aufpressen des Blechpakets mit der Wellenbohrung auf die Welle bis zu einer vorgegebenen axialen Position.

Erfindungsgemäß wird nunmehr erreicht, dass das Blechpaket des Rotors kalt gefügt werden kann und trotzdem die erforderlichen Drehmomentfestigkeit und axiale Festigkeit des Blechpakets auf der Welle gegeben ist. Die axialen Fügekräfte werden reduziert, so dass bei der Fertigung die Druckfestigkeit der Auflagefläche der Welle, sowie eine Gefahr der Knickung der Welle nicht mehr gegeben ist.

Dies wird insbesondere dadurch erreicht, dass die Presspassung nur mit einem vergleichsweise geringen Übermaß ausgelegt wird, wobei sich somit die erforderliche axiale Fügekraft um ca. 50% reduziert. Durch das reduzierte Übermaß allein, mit der "kalten" Methode würde sich nunmehr eine reduzierte Drehmomentfestigkeit ergeben. Um zumindest die bisherige Drehmomentfestigkeit zu erzielen, werden durch zusätzliche geringe Formschlüsse der einzelnen Bleche mit der Welle die bisherige Drehmomentfestigkeit erreicht.

Dies wird erfindungsgemäß erreicht durch Blechzungen an Fädelnuten, die am Innendurchmesser der Bleche angeordnet sind und die Wellenbohrung hineinragen. Idealerweise ragen diese ca. 0,2 bis 0,3 mm in die Wellenbohrung hinein. Je nach Achshöhe der dynamoelektrischen Maschine können diese Werte auch überschritten bzw. unterschritten werden.

Diese Blechzungen in den Fädelnuten werden bereits beim Stanzen der Einzelbleche mithergestellt, so dass kein zusätzlicher Fertigungsaufwand notwendig ist.

Ebenso sind Zwischenraumausnehmungen am Innendurchmesser vorgesehen und können bereits beim Stanzen der Einzelbleche mithergestellt werden.

In einer Ausführung werden nun die Fädelnuten und damit die Blechzungen und die Zwischenraumausnehmung eines Bleches durch einen Stanzprozess um 180° versetzt am Innendurchmesser der Bleche positioniert. Damit ergibt sich bei Aneinanderreihung der Bleche mit einem vorgebbaren Verdrehwinkel von 90° zwischen Fädelnuten und Zwischenraumausnehmung, die eine Blechzunge in einen Freiraum einer Zwischenraumausnehmung ragen lässt, ein Blechpaket das jeweils ein axialer Freiraum von einer Blechstärke vor und nach jeder Blechzunge vorsieht. Damit besteht die Möglichkeit einer leicht federnden axialen Verformung der Blechzunge. Beim Fügen des Blechpaketes mit den erfindunggemäßen Blechen auf eine Welle weichen die Blechzunge bzw. Blechzungen eines Bleches dabei axial in diese Zwischenraumausnehmung des benachbarten Bleches aus.

In Rotationsrichtung weist diese Blechzunge jedoch eine höhere Steifigkeit auf. Üblicherweise werden die Wellen mit einer Rauigkeit von RZ25 bearbeitet. Beim axialen Fügen des Blechpakets des Rotors streifen diese Blechzungen längs der Welle über die bearbeitete Oberfläche und glätten die Spitzen der Bearbeitungsrillen auf der Welle. Dadurch wird während des Fügevorgang bereits ein geringer Formschluss in der Breite der Blechzungen ausgebildet. Der axiale Fügekraftanteil der Blechzungen ist im Verhältnis zur hauptsächlich zylindrischen Fassung vergleichsweise gering, da diese sich leicht umbiegen können. Die Summe der Formschlüsse jedoch ergeben eine vergleichsweise hohe Verdrehsicherheit des gesamten Blechpakets auf der Welle.

Durch dieses kalte Fügen wird nunmehr die Druckfestigkeit des Wellenspiegels, d.h. die Gefahr der Knickung der Welle beim Herstellungsprozess vermieden. Es sind auch keine Wartezeiten im Fertigungsfluss mehr vorzusehen, da keine thermischen Prozesse diesen Fügeprozess begleiten.

Somit wird auch die Welle-Nabe-Verbindung über die ganze Lebensdauer sicher ausgestaltet sein.

Besonders vorteilhaft ist bei einem automatisierten Fertigungsprozess auch bei hoher Varianz des Rotors eine Automatisierung denkbar, da keine Abkühlung mit unterschiedlichen erforderlichen Zeiten erforderlich ist. Die durch die Blechzungen erreichte Federung gleicht Aufweitungen der Wellenbohrung durch Erwärmung im Betrieb oder Fliehkraftbeanspruchungen sicher aus, ohne Einbußen an der Positionierung insbesondere an der Verdrehsicherheit aufzuweisen.

Ein axiales Verhaken der Blechzungen bietet somit auch eine axiale Sicherheit gegen Verrutschen des Blechpakets auf der Welle. Die Fertigungsfügemethode kann ohne zusätzliche Bearbeitung auch für üblicherweise geschrägte Blechpakete des Rotors angewandt werden.

Die Erfindung sowie vorteilhafte Ausgestaltungen der Erfindung werden anhand prinzipiell dargestellter Beispiele näher erläutert; darin zeigen:
- FIG 1: einen Rotor mit einem Blechpaket der als Kurzschlussläufer ausgebildet ist auf einer Welle,
- FIG 2: einem prinzipiellen Fügevorgang gemäß dem Stand der Technik,
- FIG 3: ein erfindungsgemäßes Blech,
- FIG 4: eine Detaildarstellung eines erfindungsgemäßen Blechpakets,
- FIG 5: eine Detaildarstellung der Rauigkeit einer Welle,
- FIG 6: eine Detaildarstellung der Rauigkeit einer Welle nach dem Fügevorgang,
- FIG 7: eine Welle vor dem Fügen,
- FIG 8: eine Welle nach dem Fügen,
- FIG 9: eine Detaildarstellung eines Blechpakets auf einer Welle,
- FIG 10: ein gefügtes Blechpaket auf einer Welle,
- FIG 11: einen Querschnitt eines Rotors,
- FIG 12: Fädelnut mit trapezförmiger Blechzunge,
- FIG 13: Fädelnut mit rechteckförmiger Blechzunge,
- FIG 14: dynamoelektrische Maschine.

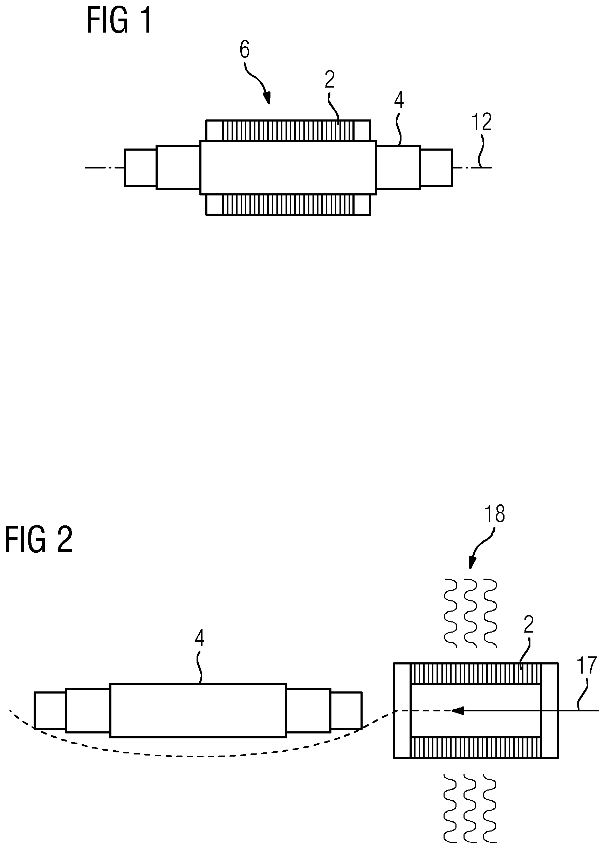

FIG 1 zeigt in einer prinzipiellen einen Längsschnitt einer Welle 4, auf der ein Blechpaket 2 eines Rotors 6 positioniert ist. Dies stellt den Endzustand zwischen Blechpaket 2 und Welle 4 dar, der von Elektromaschinenbauern angestrebt wird, um ein Drehmoment von einer dynamoelektrischen Maschine 24 über den Rotor 6 auf die Welle 4 zu übertragen oder bei einem Generator umgekehrt das Drehmoment in die Maschine zu leiten.

FIG 2 zeigt prinzipiell ein Herstellverfahren gemäß dem Stand der Technik, bei dem durch axiale Fügekraft 17 das Blechpaket 2 bei zusätzlicher Erwärmung 18 des Blechpakets 2 auf eine Welle 4 axial gepresst wird. Dabei besteht immer die Gefahr der (gestrichelt angedeuteten) Knickung der Welle 4 bei zu hohem axialen Fügekräften 17. Die Fügekraft 17 bestimmt aber dabei letztlich die Verdrehsicherheit von Blechpaket 2 und Welle 4 und damit das Übertragungsverhalten des Drehmoments.

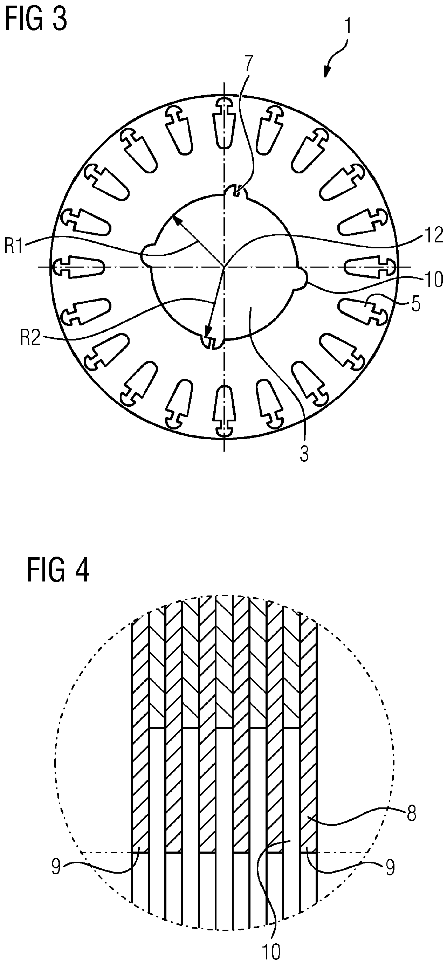

FIG 3 zeigt nunmehr ein erfindungsgemäßes Blech 1, wobei im Bereich der Wellenbohrung 3 Fädelnuten 7 vorgesehen sind. Die Fädelnuten 7 weisen in Richtung einer Achse 12 ragende Blechzungen 8 auf. Die Wellenbohrung 3 weist einen Radius R1 auf, die Blechzungen 8 sind auf einem Radius R2 angeordnet. Der Radius R2 ist dabei kleiner als der Radius R1 und zwar um ca. 0,2 bis 0,3 mm.

Die Fädelnuten 7 sind in diesem Fall 180° einander gegenüber angeordnet. Um 90° bzgl. einer Fädelnut 7 versetzt, sind Zwischenraumausnehmungen 10 angeordnet. Bei einem axial gestapelten Blechpaket 2 ist jedes zweite Blech 1 um 90° gegenüber dem vorgehenden Blech 1 angeordnet, so dass eine Blechzunge 8 in die um 90° versetzt angeordnete Zwischenraumausnehmung 10 ausweichen kann und somit einen axialen Raum zum Ausweichen während des Fügeprozesses und dann in der Endposition auf der Welle 4 hat.

Es sind pro Blech 1 auch nur eine Fädelnut 7 und nur eine Zwischenraumausnehmungen 10 möglich. Ebenso sind auch mehrere Fädelnuten 7 und Zwischenraumausnehmungen 10 pro Blech 1 möglich. Es ist jedoch beim Paketieren der Blechpakete 2 darauf zu achten, dass beim Fügen der Blechpakete 2 auf die Welle 4, die Blechzungen 8 der Fädelnuten 7, insbesondere deren Enden 9 in die Zwischenraumausnehmungen 10 der benachbarten Bleche 1 ausweichen können.

Dies gelingt durch dementsprechende winkelmäßige Verteilung der Fädelnuten 7 und Zwischenraumausnehmungen 10 an der Wellenbohrung 3 während des Stanzvorganges der Bleche 1 und der anschließenden ausgerichteten Paketierung des Blechpakets 2. So sind beispielsweise bei vier Fädelnuten 7 pro Blech 1, dementsprechend auch Zwischenraumausnehmungen 10 an diesem Blech 1 vorzunehmen. Die Fädelnuten 7 sind dann, wie die Zwischenraumausnehmungen 10 dieses Bleches 1 in Umfangsrichtung betrachtet um jeweils 90° versetzt angeordnet. Zwischen Fädelnut 7 und Zwischenraumausnehmung 10 liegen dann bei diesem Blech 1 45°.

Bei der Paketierung des Blechpakets 2 muss dann das Folgeblech jeweils um 45° gedreht werden, um zu gewährleisten, dass eine Blechzunge 8 in die um 45° versetzt angeordnete Zwischenraumausnehmung 10 ausweichen kann und somit einen axialen Raum zum Ausweichen während des Fügeprozesses und dann in der Endposition auf der Welle 4 hat.

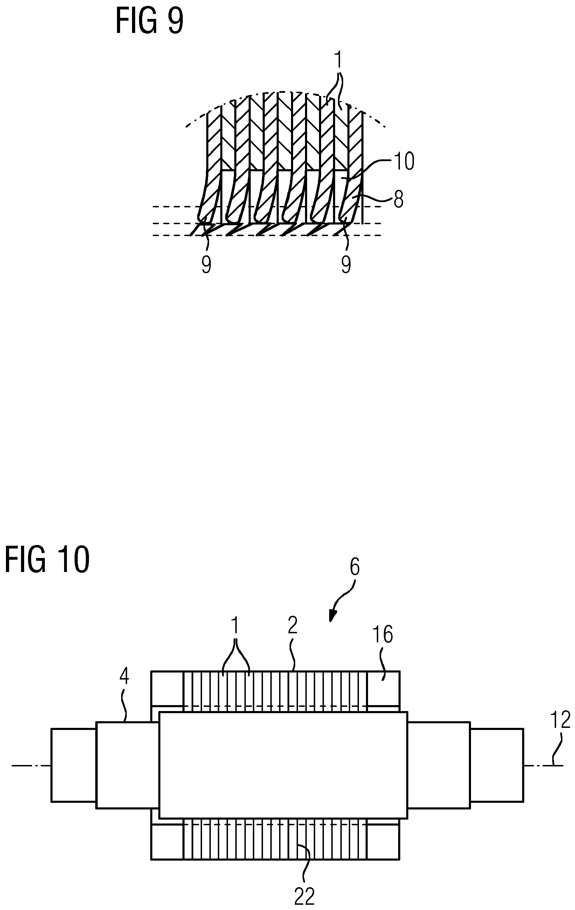

FIG 4 zeigt eine dementsprechende axiale Anordnung dieser Bleche 1, mit einem Zwischenraum 10, in den die Blechzungen 8 axial ausweichen können, wie dies in FIG 9 prinzipiell dargestellt ist.

Wie letztlich der Rotor 6 selbst ausgestaltet ist, als Käfigläufer oder permanenterregter Rotor 6 oder mit einem eigenen Wicklungssystem versehen, das über Schleifringe gespeist wird, spielt letztlich bei der axialen Schichtung des Blechpakets 2 auf der Welle 4 eine untergeordnete Rolle.

Im axialen Verlauf der Nuten 5 des Blechpakets 2 des Rotors 6 ist darauf zu achten, dass diese im Wesentlichen axial fluchtend angeordnet sind. Es ist somit darauf zu achten, dass sowohl die Nuten 5, als auch die Fädelnuten 7 in vorgegebener axialer Reihenfolge mit Zwischenausnehmungen 10 axial fluchten.

In FIG 3 sind beispielhaft Nuten 5 eines Kurzschlussläufers dargestellt, die aber letztlich den erfindungsgemäßen Gedanken nicht einengen sollen.

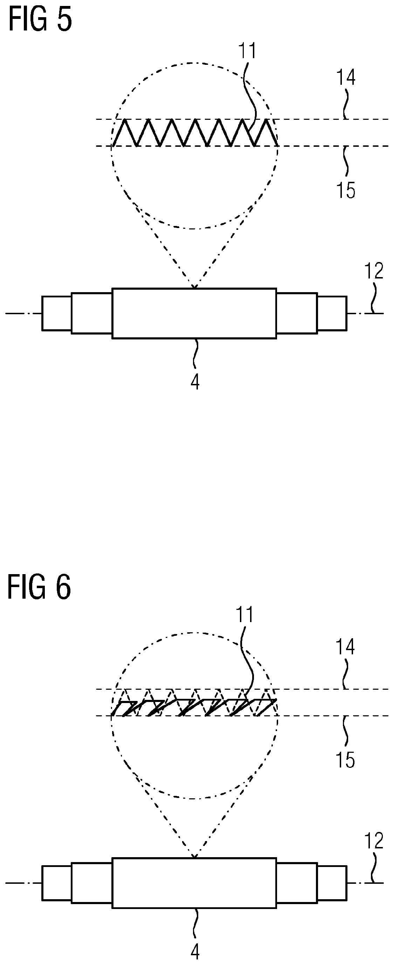

FIG 5 zeigt eine Welle 4 nach der Bearbeitung und vor dem Fügevorgang, wobei eine Rauigkeit 11 vorliegt, die sich zwischen einem Grundprofil 15 und einem Bezugsprofil 14 erstreckt. Nach dem Fügevorgang ist nunmehr die Rauigkeit 11 im Bereich der Blechzungen 8 reduziert, insbesondere durch das axiale Fügen, wobei die Blechzungen 8 auf dem Bezugsprofil 14 die Rauigkeit 11 reduzieren, wie dies in FIG 6 prinzipiell dargestellt ist.

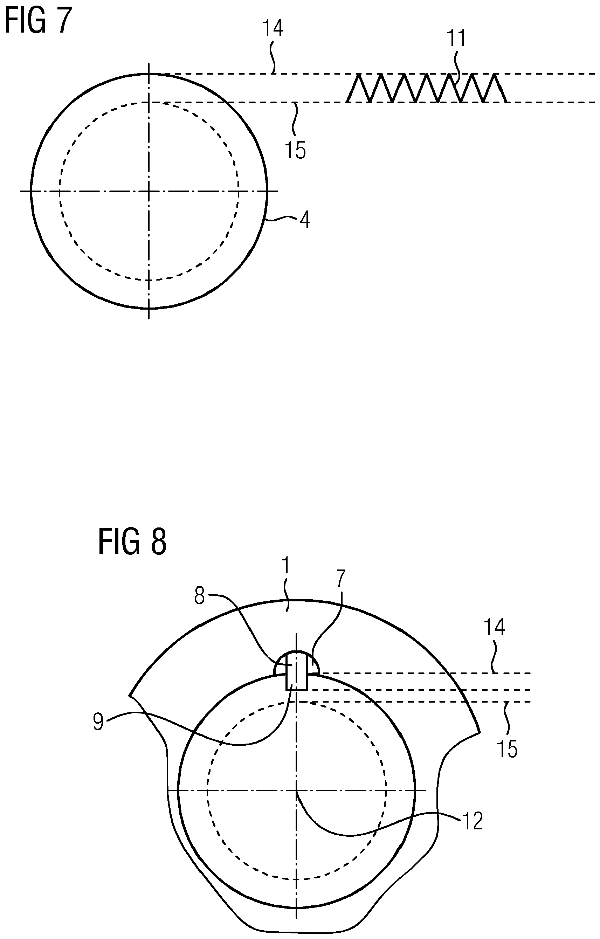

FIG 7 zeigt dies auch im Querschnitt der Welle 4, wobei sowohl in axialer Richtung als auch in Umfangsrichtung jeweils eine Rauigkeit 11 an der Oberfläche der Welle 4 vorliegt.

FIG 8 zeigt eine Detailansicht eines Bleches 1, das auf der Welle 4 positioniert ist und in dem eine Blechzunge 8 der Fädelnut 7 in die Welle 4 eingreift und somit im Bereich des axialen Fügens der Blechzungen 8 auf der Welle 4 zur Reduzierung der Rauigkeit 11 beiträgt.

In einer weiteren Detaildarstellung in einem Teillängsschnitt gemäß FIG 9, wird nunmehr die axiale Abfolge der Bleche 1 auf der Welle 4 dargestellt. Die Blechzungen 8 sind dabei an ihrem Ende 9 abgebogen und haben so zur Reduzierung der Rauigkeit 11 beigetragen. Die Blechzungen 8 der Fädelnuten 7 weichen axial betrachtet in den Zwischenraum 10 des benachbarten Bleches 1 aus.

Nach dem Fügevorgang des Blechpakets 2 mit den erfindungsgemäßen Blechen 1 auf die Welle 4 sind nunmehr Formschlussriefen am Wellenaußendurchmesser festzustellen.

FIG 10 zeigt das Blechpaket 2 während des axialen Fügevorganges auf die Welle 4.

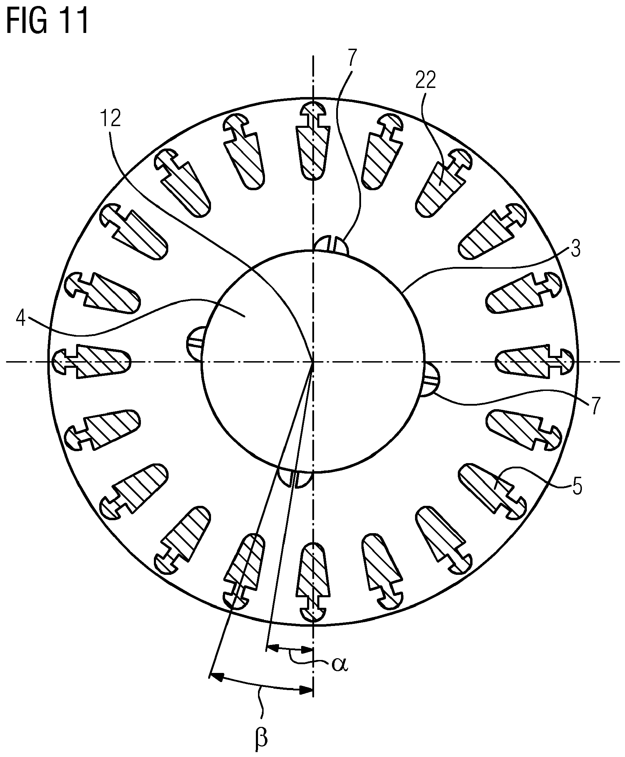

Gemäß FIG 11 ist nunmehr bei einem Blechpaket 2 des Rotors 6 auf einer Welle 4 folgende Ansicht zu sehen. In dieser Ausführungsform ist ein Winkel α, der den Versatz der Fädelnut 7 zu einer Nut 5 bezeichnet. Die Fädelnut 7 ist in dieser Ausführungsform zwischen zwei Nuten 5 angeordnet. α entspricht somit der halben Nutteilung β des Rotors 6.

Die Nuten 5 des Rotors 6 sind durch elektrische Leiter 22 belegt, die als Stäbe axial einsetzbar sind oder durch ein Druckgussverfahren gebildet wurden. Die in dieser Darstellung nicht gezeigten Kurzschlussringe 16 werden angelötet oder durch Cold-Spray-Verfahren elektrisch mit den Leitern 22 kontaktiert. Ebenso ist es vor allem bei den Druckgussverfahren möglich die Kurzschlussringe 16 in einem Gießvorgang mit den Leitern 22 zu gießen.

In einer anderen Ausführung können α und β auch identisch sein.

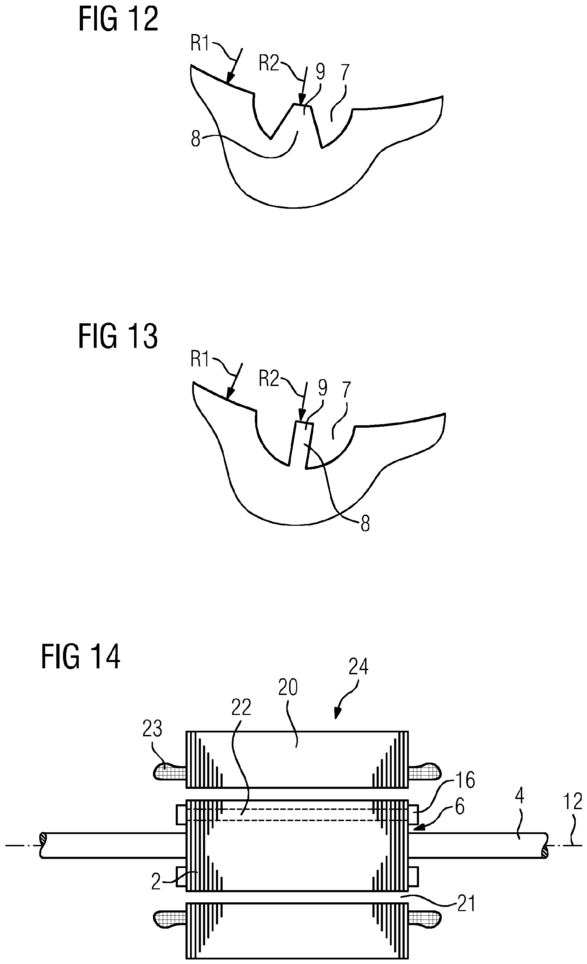

FIG 12 zeigt eine Blechzunge 8 einer Fädelnut 7, die eine trapezförmige Gestaltung aufweist. Dies bewirkt eine gegenüber der Blechzunge 8 nach FIG 13 mit parallelen Flanken eine axial größere Rückstellkraft des Endes 9 der Blechzunge 8. Damit wird die Drehmomentübertragung des Blechpakets 2 auf die Welle 4 weiter verbessert.

Grundsätzlich sind auch andere Formgebungen der Blechzungen 8 möglich, um je nach Bedarf eine geringe oder größere axiale Rückstellkraft an den Enden 9 der Blechzungen 8 zu erhalten. Die Rückstellkraft wird somit von der Differenz der Radien R1 und R2, als auch vom Material der Bleche 1, von der Formgebung der Blechzungen 8 als auch der Anzahl der Fädelnuten 7 an der Wellenbohrung 3 eines Bleches 1 beeinflusst.

FIG 14 zeigt eine prinzipiell dargestellte dynamoelektrische rotatorische Maschine 24 mit einem Rotor 6, der als Käfigläufer ausgeführt ist. An seinen Stirnseiten zeigt der Rotor 6 einen Kurzschlussring 16, der die elektrischen Leiter 22 in den Nuten 5 des Rotors 6 kurzschließt. Durch elektromagnetische Wechselwirkung des Rotors 6 über einen Luftspalt 21 mit einem bestromten Wicklungssystem 23 in einem Stator 20 wird ein Drehmoment auf die Welle 4 erzeugt.

Derartige Maschine 24 werden vor allem für Antriebe beispielsweise in der Öl- und Gasindustrie, der Nahrungsmittelindustrie, bei Förderbändern eingesetzt. Dort treiben sie u.a. Kompressoren, Lüfter und Werkzeugmaschinen an. Ebenso können sie auch als Antriebe in der Verkehrstechnik eingesetzt werden.

## Patentansprüche

1. Blech (1) eines Rotors (6) einer rotatorischen dynamoelektrischen Maschine mit einer Wellenbohrung (3) mit einem Radius (R1), mit zumindest zwei Fädelnuten (7) und zwei Zwischenraumausnehmungen (10), wobei die Fädelnuten (7) jeweils zumindest eine radial nach innen zu einer Achse (12) weisende Blechzunge (8) aufweisen, derart, dass die radial nach innen weisenden Enden (9) der Blechzunge (8) auf einem Radius (R2) liegen, wobei R2 kleiner R1 ist.

2. Blech (1) nach Anspruch 1, **dadurch gekennzeichnet, dass** die Fädelnuten (7) umfänglich in der Wellenbohrung (3) gleichmäßig verteilt sind.

3. Blech (1) nach Anspruch 2, **dadurch gekennzeichnet, dass** die Fädelnuten (7) eines Bleches (1) in der Wellenbohrung (3) einander gegenüber liegen.

4. Blech (1) nach einem der vorhergehenden Ansprüche, **dadurch gekennzeichnet, dass** die Zwischenraumausnehmungen (10) in Umfangsrichtung betrachtet zwischen den Fädelnuten (7) angeordnet sind.

5. Blechpaket (2) eines Rotors (6) einer rotatorischen dynamoelektrischen Maschine mit Blechen (1) nach einem der vorhergehenden Ansprüche 1 bis 4, wobei in axialer geschichteter Abfolge die Bleche (1) des Rotors (6) in axialer Richtung zumindest abschnittsweise folgendermaßen geschichtet sind, indem die Bleche (1) mit Blechzungen (8) zwischen Blechen (1) angeordnet sind, die in diesem Bereich Zwischenraumausnehmungen (10) aufweisen.

6. Dynamoelektrische rotatorische Maschine (24) mit einem Rotor (6), der ein Blechpaket (2) eines Rotors (6) einer rotatorischen dynamoelektrischen Maschine mit Blechen (1) nach einem der vorhergehenden Ansprüche 1 bis 4 aufweist, wobei in axialer geschichteter Abfolge die Bleche (1) des Blechpakets (2) des Rotors (6) zumindest abschnittsweise derart geschichtet sind, dass die Bleche (1) mit Blechzungen (8) zwischen Blechen (1) angeordnet sind, die in diesem Bereich Zwischenraumausnehmungen (10) aufweisen.

7. Verwendung einer dynamoelektrischen rotatorischen Maschine (24) nach Anspruch 6 bei Kompressoren, Pumpen, Werkzeugmaschinen.

8. Verfahren zum Fügen eines Blechpakets (2) gemäß Anspruch 4 auf eine Welle (4) durch folgende Schritte:
- Bereitstellen eines Blechpakets (2) nach Anspruch 5,
- Bereitstellen einer Welle (4) in einer Vorrichtung,
- axiales Aufpressen des Blechpakets (2) mit der Wellenbohrung (3) auf die Welle (4) bis zu einer vorgegebenen axialen Position.
